# EUROPEAN PATENT APPLICATION

(11) **EP 2 164 043 A1**
(43) Date of publication of application: **17.03.2010**
(21) Application number: 08425602.3
(22) Date of filing: 12.09.2008
(51) Int. Cl.: G06T 7/00, H04N 17/00

(54) **Video camera calibration and perspective calculation**

(71) Applicant: March Networks Corporation, Ottawa, Ontario K2K 2X3 (CA)
(72) Inventor: Disaro' Mauro, 43022 Monticelli Terme (Parma) (IT); Monica, Francesco, 43024 Neviano Degli Arduini (Parma) (IT)
(74) Representative: Petruzziello, Aldo

(57) **Abstract**

A method and system are provided for automatic calibration of a video camera by providing automatic perspective calculation. A calibration object detector is arranged to detect a calibration object in video data representing a scene observed by a video camera, and arranged to gather object data for the detected calibration object at a multiplicity of positions, such as three or more positions. The calibration object detector can include an automatic moving object detector and/or a static object detector. An automatic plane calculator is in communication with the calibration object detector and arranged to calculate the perspective of the camera based on gathered object data for at least one calibration object at a multiplicity of positions. The automation provided can enhance the operation of video analytics systems and reduce errors that can be introduced when an unskilled operator manually enters parameters on which the perspective is estimated.

## Description

### FIELD OF THE INVENTION

The present invention relates generally to video surveillance. More particularly, the present invention relates to the estimation or calculation of a perspective of a video camera.

### BACKGROUND OF THE INVENTION

Video surveillance systems are used to keep watch over physical areas to assist in identifying events of interest. Such events, and associated data, can relate to maintaining safety and security, mitigating risk, increasing operational efficiency, preventing loss of products or revenue, gathering business intelligence, and a variety of other applications.

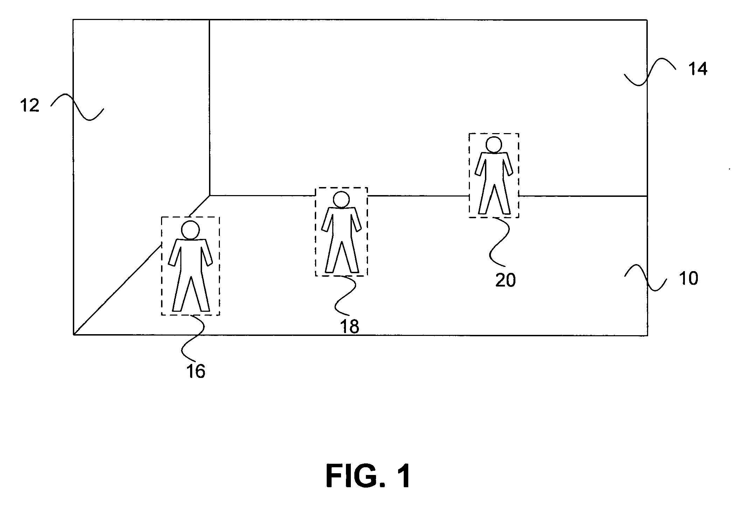

**FIG. 1** illustrates a typical scene observed by a video surveillance camera. This exemplary scene shows a room or area having a floor **10** and two walls **12** and **14.** Using known approaches for setting up or calibrating a camera, it is necessary for an operator to manually provide an observed size of a typical person appearing at a minimum of three different distances observable in the scene. The observed size can be provided in response to the operator drawing a calibration box (shown in dotted lines in **FIG. 1****)** using a graphical user interface to outline the observed height and width of the typical person. Based on the known real size of the typical person, this information is sufficient for the system to estimate the perspective.

The manual approach described in relation to **FIG. 1** requires an operator at a computer to draw the calibration boxes representing the observed person sizes at various distances, and another person to stand at the various distances from the camera, so that the boxes can be drawn based on that other person's observed dimensions. For example, a first box **16** drawn by an operator indicates that a person at a first position has a certain height as seen in the video captured from the camera. The height can be measured in pixels or any other suitable measurement. At a second position, the person's height in the video is a different height, represented by another box **18** drawn by the operator around the second person. Similar steps can be followed to draw a third box **20** and any subsequent boxes.

Such a calibration approach requires two people. The calibration is susceptible to user error that can be introduced by incorrectly drawing the boxes, or providing inaccurate distances corresponding with the boxes. Also, the calibration can require an operator to set or enter additional parameters such as the height of the camera, the angle, the real size of the person, etc. for the system to be able to determine the perspective.

Having an accurate perspective can be important in obtaining good results for video analytics. The manual setup described above can be very time consuming, especially in cases where there are many cameras to be set up in a network. Also, an expert operator (and a second person) is required in order to provide the precise technical information required to properly set up the camera to account for the perspective of the camera.

It is, therefore, desirable to provide a video camera perspective calculation approach including additional automated steps.

### SUMMARY OF THE INVENTION

It is an object of the present invention to obviate or mitigate at least one disadvantage of previous manual video camera configuration approaches.

In an aspect, the present invention provides a video camera perspective calculator including a calibration object detector in communication with an automatic plane calculator. The calibration object detector is arranged to detect a calibration object in video data representing a scene observed by a video camera, and arranged to gather object data for the detected calibration object at a multiplicity of positions; The automatic plane calculator is arranged to calculate the perspective of the camera based on gathered object data from the calibration object detector for at least one calibration object at a multiplicity of positions.

The calibration object detector can include an automatic moving object detector arranged to detect a plurality of moving objects, where each of the moving objects traversing a field of view of the video camera. In that case, the automatic plane calculator can calculate the perspective of the camera based on gathered object data for the plurality of moving objects at a multiplicity of positions.

The calibration object detector can include a static object detector arranged to detect a static calibration object placed at a plurality of positions in the field of view of the video camera. The static object detector can store known properties of the static calibration object. Then, the static object detector can automatically detect the static calibration object based on a comparison of the stored properties of the static calibration object with video data in the field of view of the video camera.

The static object detector can detect the static calibration object in response to receiving an indication that the static calibration object is within the field of view of the video camera.

The automatic plane calculator can include a manual parameter receiver arranged to accept manually input perspective data provided by an operator.

The video camera perspective calculator can further include a data enhancer, in communication with the automatic plane calculator, to iteratively eliminate outliers from data samples to be processed by the automatic plane calculator.

In another aspect, the present invention provides a video camera calibration kit including a calibration object, a calibration object detector, and an automatic plane calculator in communication with the calibration object detector. The calibration object includes two areas having contrasting visual appearance and easily distinguishable from a surrounding scene. The calibration object detector is arranged to detect the calibration object in video data representing a scene observed by a video camera and to gather position data for the detected calibration object at a multiplicity of positions. The calibration object detector also includes a memory storing a known size and shape of the calibration object. The automatic plane calculator is arranged to calculate the perspective of the camera based on gathered object data from the calibration object detector for at least one calibration object at a multiplicity of positions.

The kit can further include instructions for using the components of the kit to calibrate a video camera by calculating the perspective of the camera based on detection of the calibration object. The calibration object can include a first area of a first colour, and a second area of a second contrasting colour.

In a further aspect, the present invention provides a method of providing one or more calibration tools for calculating a perspective of a video camera including the following steps: providing an automatic calibration tool arranged to automatically calibrate the camera by calculating a perspective based on observed objects moving within the camera's field of view; providing a semi-automatic calibration tool to be used in conjunction with a calibration object to calibrate the camera by calculating the perspective based on automatic detection of the calibration object at a multiplicity of positions in the camera's field of view; and providing a manual calibration tool to receive camera calibration parameters manually entered by a user and to calculate the perspective based on the manually entered parameters.

The step of providing the semi-automatic calibration tool can be performed if the automatic calibration tool is unable to successfully calibrate the camera. The step of providing the manual calibration tool can be performed if the semi-automatic calibration tool is unable to successfully calibrate the camera.

In a yet further aspect, the present invention provides a computer readable medium storing statements and instructions for execution by a processor to provide a graphical user interface arranged to perform the method of providing one or more calibration tools as described above.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
**FIG. 1** illustrates a typical scene observed by a video surveillance camera.
**FIG. 2** illustrates a video camera perspective calculator according to an embodiment of the present invention.
**FIG. 3** illustrates a scene observed by a video camera in relation to which an automatic perspective calculation according to an embodiment of the present invention can be practiced.
**FIG. 4** illustrates an output of a graphical user interface of a video camera calibrator according to an embodiment of the present invention using a moving object detector.
**FIG. 5** illustrates an output of a graphical user interface of a video camera calibrator according to an embodiment of the present invention using a static object detector.
**FIG. 6** illustrates contents of a video camera calibration kit according to an embodiment of the present invention.
**FIG. 7** is a flowchart illustrating a method of calibrating a video camera according to an embodiment of the present invention.

### DETAILED DESCRIPTION

Generally, the present invention provides a method and system for automatic calibration of a video camera by providing automatic perspective calculation. A calibration object detector is arranged to detect a calibration object in video data representing a scene observed by a video camera, and arranged to gather object data for the detected calibration object at a multiplicity of positions, such as three or more positions. The calibration object detector can include an automatic moving object detector and/or a static object detector. An automatic plane calculator is in communication with the calibration object detector and arranged to calculate the perspective of the camera based on gathered object data for at least one calibration object at a multiplicity of positions. The automation provided can enhance the operation of video analytics systems and reduce errors that can be introduced when an unskilled operator manually enters parameters on which the perspective is estimated.

Determining the perspective of a video camera can be equated to estimating or calculating the position of the floor or ground in an observed scene. If the system knows that the floor is visible in a particular direction, when objects are observed moving in different positions, the real dimensions can be calculated.

A measure or estimation of the perspective is commonly used in video analytics. The position of the floor can be used to determine speed or velocity of a moving object. This can be used in a speed alarm module to detect whether a car moving in an observed area is exceeding a posted speed limit.

There are many analytics algorithms based on knowing the perspective of an observed scene. For example, a tracking system estimates the movement of the objects viewed, and correlates objects viewed in a frame with objects viewed in a subsequent frame. Another system can use the perspective to distinguish between two people whose paths cross in an observed scene. Each of these systems uses the current perspective to refine the decision. For example, if a camera detects a car moving in a wrong direction along an observed road, the system can use the perspective information to discard a detected acceleration value based on knowledge of the perspective.

Video analytics, such as a tracking engine which uses the perspective setting, can also generate alarms in situations such as: an object crossing a line; an object wandering in an area in the screen (loitering); and a flow counter.

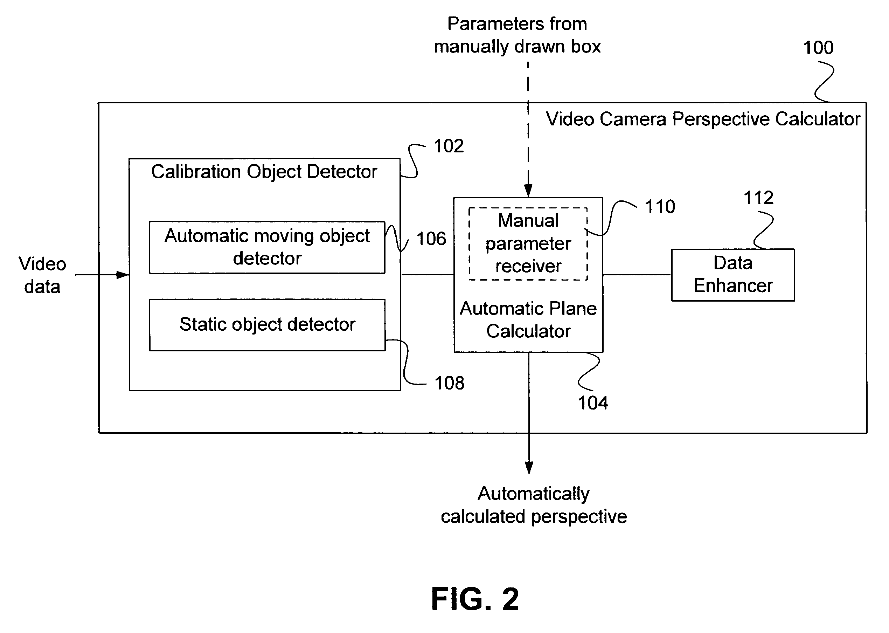

**FIG. 2** illustrates a video camera perspective calculator **100** according to an embodiment of the present invention. The video camera perspective calculator includes a calibration object detector **102** in communication with an automatic plane calculator **104.** The calibration object detector **102** is arranged to detect a calibration object in video data representing a scene observed by a video camera, and arranged to gather object data for the detected calibration object at a multiplicity of positions, such as three or more positions.

The calibration object detector **102** can include an automatic moving object detector **106** arranged to detect a plurality of moving objects, each of the moving objects traversing a field of view of the video camera. In that case, the automatic plane calculator **104** determines the perspective of the camera based on gathered object data for the plurality of moving objects at a multiplicity of positions. This can be beneficial for calibrating a camera with a long-range perspective view, or when many objects are moving in an observed scene, for example if the camera is observing a road with many cars traveling on the road.

The calibration object detector **102** can also include a static object detector 108 arranged to detect a calibration object placed at a plurality of positions in the field of view of the video camera. The static object detector **108** can detect the calibration object in response to receiving an indication that the calibration object is within the field of view of the video camera. The indication can be provided in response to an input received from an operator that the calibration object is within the camera's field of view. This can be beneficial for calibrating a camera with a short- or medium-range perspective view, such as video cameras installed in indoor environments, or environments with few objects moving in the observed scene.

The static object detector **108** can store known properties of the calibration object. Based on the stored properties, the static object detector **108** can automatically detect the calibration object based on a comparison of the stored properties of the calibration object with video data in the field of view of the video camera. In an embodiment, the calibration object can be a self-supporting calibration object that is shaped and constructed to support itself when placed on a floor or on the ground. Alternatively, the calibration object can be arranged for coupling to a self-supporting object, such as a box or a support member, for easy placement and movement of the calibration object.

Using the static object detector **108** according to an embodiment of the present invention, an operator does not need to provide the calibration system with any information such as the height of the camera, the angle, etc. The system does not need to know its position, since it knows the real size of the calibration object, and can compare that with the observed dimensions of the object to determine other parameters.

The static object detector **108** can additionally automatically detect a type of calibration object when the object is placed in a scene. For example, the system can detect the type of calibration object based on detected dimensions of the object. In another embodiment, the calibration object includes a calibration object type identifier. For example, the calibration object type identifier can be provided in one of the existing areas in the object, in a way that is easily identifiable and easily distinguished from the surrounding scene. In another embodiment, the system includes an interface where the user can input or identify the type of calibration object used, so that the system can properly detect it.

The automatic plane calculator **104** shown in **FIG. 2** is arranged to determine the perspective of the camera based on gathered object data from the calibration object detector for at least one calibration object at a multiplicity of positions, i.e. three or more positions. The automatic plane calculator **104** calculates a plane of a "floor" or of the "ground" in the observed video scene to determine the perspective of the camera in response to the position data gathered by the calibration object detector.

The automatic plane calculator **104** can calculate a geometric representation of a plane of a floor or of the ground. For example, the geometric representation can be in the form of the equation ax + by + c = 0. The video camera perspective calculator **100** uses these parameters in a geometric way to transform image based coordinates to real world coordinates, and vice versa. At least three samples are required to calculate, or estimate, a perspective. The automatic plane calculator **104** can include a planar regression model, or can be arranged to implement a planar regression algorithm, to calculate the geometric representation of the perspective plane.

In an embodiment, the automatic plane calculator **104** can include a manual parameter receiver **110** arranged to accept manually input perspective data provided by an operator, such as parameters from a manually drawn box. This can be provided as a fallback solution in case of failure or malfunction of the calibration object detector. Providing all three perspective data gathering options together gives a user a universal tool that can calibrate a camera based on perspective data gathered automatically, semi-automatically, or input manually, depending on the situation.

A data enhancer **112** can be provided in communication with, or as part of, the automatic plane calculator **104** and is arranged to enhance the data set upon which the perspective estimation is based. The data enhancer **112** can iteratively eliminate outliers from data samples to be processed by the automatic plane calculator **104.** The data enhancer **112** can implement an algorithm such as the RANSAC (RANdom SAmple Consensus) estimation algorithm. When collecting a large amount of data, for example relating to the detected moving objects, the data will include some errors. The RANSAC algorithm is a statistical tool used to estimate a plane or other geometrical shape when, in a collection of data, there are many errors.

An outdoor scene typically includes a lot of "noise". For example, any data relating to moving objects that are not moving along the path or road being observed to estimate the perspective can be considered to be noise. In this case, the data enhancer **112** can be used in conjunction with the automatic plane calculator **104** to narrow down or eliminate data samples that represent noise before the automatically calculated perspective is determined. For moving objects, each data sample can include dimensions of an object as it travels along a plurality of positions along a path. The final result of the automatically calculated perspective can be the equation of the plane, or the associated parameters.

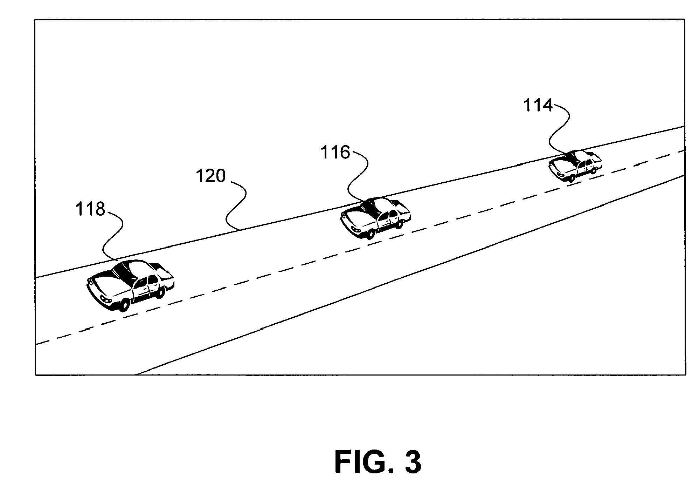

**FIG. 3** illustrates a scene observed by a video camera in relation to which an automatic perspective calculation according to an embodiment of the present invention can be practiced. When the video camera's observed scene includes many moving objects and a distant perspective, fully automatic perspective calculation can be achieved. The camera can observe a plurality of objects passing through the camera's field of view, and can observe the change in dimension of the objects as they pass across the observed scene. Based on observed object data, a calibration object detector and an automatic plane calculator according to an embodiment of the present invention can automatically calculate the perspective of the camera, such as by calculating an equation of a plane representing the "floor" or "ground" of the observed scene.

Having a large number of objects moving in a camera's field of view, the automatic calibration tool can begin a detection phase without human intervention. This can be used in long range cameras, such as those looking at a road, as shown in **FIG. 3****.**

A system according to an embodiment of the present invention can follow an object through the scene, collect position and object size information as the object traverses the scene, and calculate the perspective based on the collected information. In other words, an object is tracked, the system collects data samples as the object traverses the scene, the change in size is observed. A system according to an embodiment of the present invention can include analytics to detect a car moving along the road in the scene.

For example, the automatic moving object detector can detect a car at first, second and third positions **114, 116** and **118,** respectively. It is also able to detect that the car moving along the road is the same object at different locations. The camera/system also detects the dimension of the object at each position, typically being larger at one end of the scene than the other. As shown in **FIG. 3****,** the car has a smaller dimension at position **114** and increasingly larger dimensions at positions **116** and **118.** The automatic plane calculator can then define the perspective of the plane based on the detected positions and corresponding dimensions of the moving object.

While only one moving object at a plurality of positions is shown in **FIG. 3** for the sake of simplicity, accuracy of the system is increased by observing a plurality of moving objects moving along the path of the road. Over time, the system learns progressively to discard or ignore data relating to spurious moving objects and to perform more accurate perspective detection, such as with the assistance of a data enhancer, as described in relation to **FIG. 2****.**

Referring back to **FIG. 3****,** the system is able to automatically detect that movement in an observed scene is occurring primarily along a particular path or horizon, represented as the path of the road **120.** Objects are generally moving along the path of interest **120,** as well as other objects moving in the scene, but not along the path of interest. For example, cars moving along a road of interest are observed along with cars, bicycles, or people moving along other paths included in the scene. The movement of objects along the paths that are not paths of interest is considered noise and can be eliminated with the assistance of a data enhancer.

After a sufficient amount of time, the system is able to observe sufficient samples that it can estimate the perspective plane without any human intervention. In this case, many moving objects and some time is required. After some time, a visual representation of the determined perspective can be displayed on the observed scene.

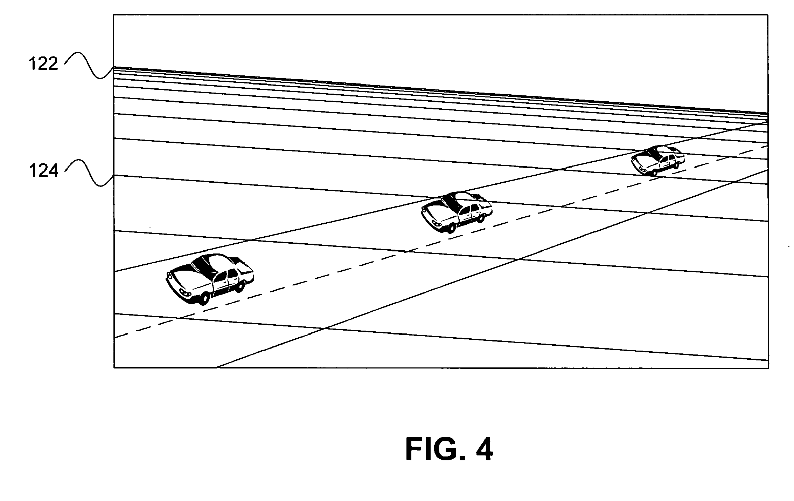

**FIG. 4** illustrates an output of a graphical user interface of a video camera calibrator according to an embodiment of the present invention using a moving object detector. In **FIG. 4****,** a representation of the determined perspective is superimposed onto an image of the scene. A calculated perspective horizon line **122** is provided that represents the horizon if there were no obstructions to the plane. Additional perspective lines **124** are provided as part of the representation of the determined perspective. Since the moving objects change with time, there are no indications relating to the moving objects in relation to which the perspective was calculated. As seen in **FIG. 4****,** the orientation of the perspective lines can be different from the orientation of the path of interest.

An automatic perspective calculation method according to an embodiment of the present invention can include an estimation phase, where the data is collected and processed, and a result phase where the calculated plane is displayed. The result is that the system calculates a plane without any human intervention.

Embodiments of the present invention work best when the target scene includes a road, or path of interest, with a straight portion. In more complex situations with curved roads, the system can focus in on a straight portion of the road and include data from that straight portion. The system can omit data collected from curved portions, not only because the car changes shape because of the perspective, but also because it changes shape if the car is observed from the top or the side. The omission can be done by selecting a substantially straight portion of the path of interest prior to beginning collection of sample data. Data samples will either not be collected in those areas, or collected data samples in those areas will be discarded or ignored.

The selection of a substantially straight portion can be done by the user or operator, or can be done automatically using an algorithm that detects portions of the path of interest having sufficient straightness. When the camera being calibrated has zoom capabilities, the camera can zoom in to a substantially straight portion of a curved road as a way to select certain data samples.

To obtain good perspective results, a road or path with a lot of traffic flow is currently preferred. In an exemplary embodiment, the system can obtain an accurate perspective estimation after about 5-6 minutes of observing objects, or about 100 distinct detected objects, moving in the scene. Observing moving objects for a larger number of samples will enhance the accuracy and obtain better filtering of the results. In another embodiment, 10 minutes of observation in a high traffic road yields an accurate perspective estimation.

Embodiments of the present invention can also be used to detect people as moving objects. To do this, the moving object detector can include a person detection module to account for the change in shape of a person depending on how their trajectory changes as they traverse a scene along a path.

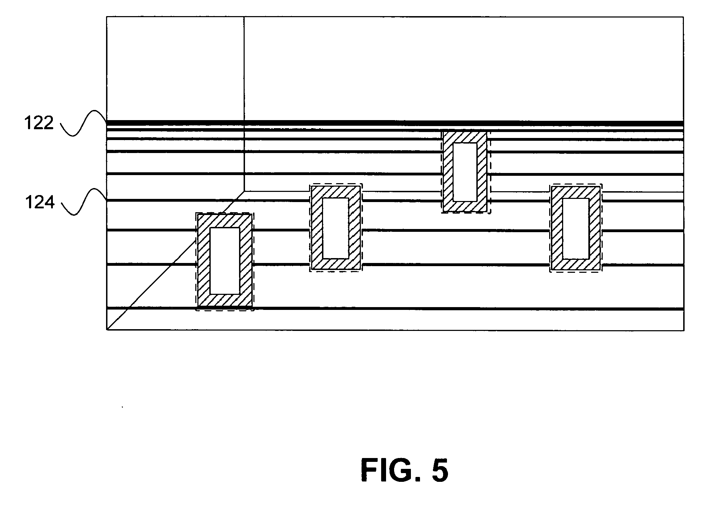

**FIG. 5** illustrates an output of a graphical user interface of a video camera calibrator according to an embodiment of the present invention using a static object detector. Similar to **FIG. 4****,** **FIG. 5** shows a representation of the determined perspective, which can be superimposed onto an image of the scene that can also include the boxes representing the outline of the detected objects. The plane is the plane of the floor of a room. A calculated perspective horizon line **122** is provided that represents the horizon if there were no walls obstructing the plane. Additional perspective lines **124** are provided as part of the representation of the determined perspective. The system can verify that the determined perspective is accurate by observing that an object moving along one of the perspective lines maintains the same size. For example, a man walking along the line will remain the same size in the scene.

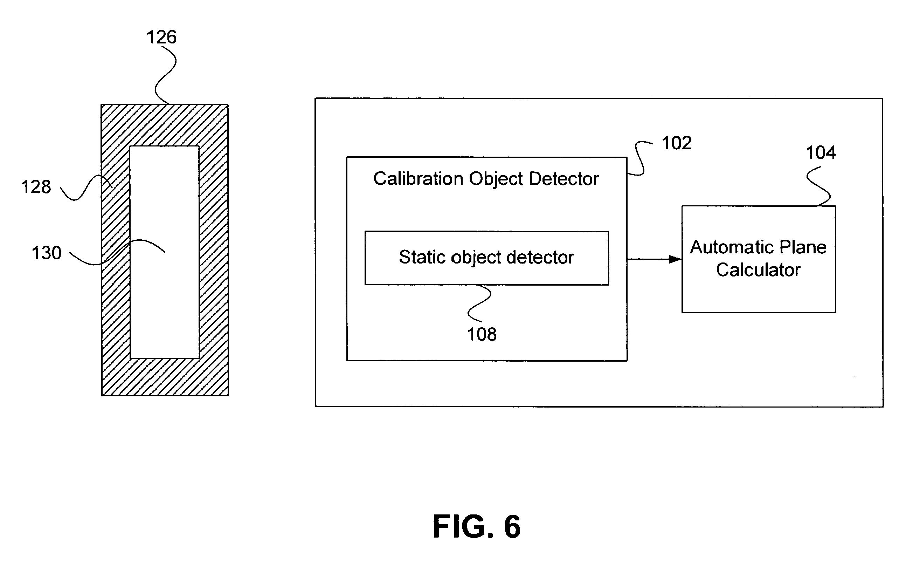

**FIG. 6** illustrates contents of a video camera calibration kit according to an embodiment of the present invention. The kit includes a calibration object **126,** a calibration object detector **102** and an automatic plane calculator **104.** The kit can be sold to facilitate calibration of a video camera, and calculation of the video camera's perspective.

The calibration object detector **102** is arranged to detect the calibration object in video data representing a scene observed by a video camera and to gather position data for the detected calibration object at a multiplicity of positions. The calibration object detector **102** includes a memory storing a known size and shape of the calibration object. The automatic plane calculator **104,** which is in communication with the calibration object detector **102,** is arranged to determine the perspective of the camera based on gathered object data from the calibration object detector for at least one calibration object **126** at a multiplicity of positions.

The calibration object detector **102** and the automatic plane calculator **104** can be provided as part of a calibration tool. In an embodiment, the calibration tool is provided as statements and instructions stored on a computer-readable medium which, when executed, cause a processor to provide the calibration object detector and the automatic plane calculator, which can include an associated graphical user interface. In another embodiment, the calibration tool is provided as a stand-alone device providing the functionality of the calibration object detector, the automatic plane calculator, and an associated graphical user interface.

The calibration object **126** facilitates and automates certain aspects of video camera configuration. The calibration object **126** has a known shape, colour and size, and can have contrasting visual features or identifiers easily distinguishable from a typical observed camera scene. A provided calibration tool interacts with the calibration object.

In the embodiment shown in **FIG. 6****,** the calibration object **126** includes two areas having contrasting visual appearance and easily distinguishable from the surrounding scene. As shown in **FIG. 6****,** the calibration object can include a first area **128** of a first colour, and a second area **130** of a second contrasting colour. For example, the outer area can be orange and the inner area can be white. While the first and second areas are shown as an inner and outer area in this embodiment, other embodiments can be provided in which the areas are provided in another relationship with one another, such as side by side or on top of one another. More than two areas can be provided in another embodiment.

The contrasting visual identifiers used within the same calibration object can include two contrasting colours having a strong chroma contrast. The calibration object can include strong edges between the contrasting colours to permit easier identification. Strong edges permit easier detection of the dimensions of certain portions of the calibration object. If there is a very strong change in colour, the position of corner angles can be more readily detected. This can be an important factor in a precise determination of the size of the calibration object, or of an area within the object.

In an embodiment, the calibration object **126** can comprise a printed sheet with a known size, colour and shape. The calibration object can be easily re-positioned within the scene during calibration. In an embodiment, the calibration object can be a self-supporting calibration object that is shaped and constructed to support itself when placed on a floor or on the ground. Alternatively, the calibration object can be arranged for coupling to a self-supporting object, such as a box or a support member, for easy placement and movement of the calibration object.

In the embodiment shown in **FIG. 6****,** the calibration object has a substantially rectangular shape. In an exemplary embodiment, the calibration object has a height of about 1.6 metres and a width of about 0.6 metres. The calibration object in this exemplary example includes an outer portion of a first colour, such as orange, and a contrasting inner portion of a second contrasting colour, such as white. A logo or other useful text and/or images can also be included in the inner portion. Such text can include, for example, instructions for proper placement of the calibration object for proper detection in the calibration method according to an embodiment of the present invention.

In manual perspective estimation, the dimensions of a typical person are normally used for calibration. These dimensions are about 1.8 metres wide and 0.7 metres wide. In an alternative embodiment, these dimensions can be used for the calibration object. The smaller and presently preferred size for the calibration object is similar to the dimensions of a typical person, but slightly reduced to facilitate placement of the object by a user.

Reducing the size of the calibration object significantly more than this may render detection of the object difficult at large distances from the camera being calibrated. The dimensions of the calibration object in the exemplary embodiment offer a balance of practical movement of the object and easy detection of the object by the system.

In another embodiment, a calibration object of about 0.9 metres high (and 0.35 metres wide) can be detected at distances of about 6 or 7 metres from the camera. In a further embodiment, a calibration object of about 1.6 metres high can be detected at a distance of about 10 to about 20 metres from the camera.

A kit according to an embodiment of the present invention can include instructions for an operator. The instructions can indicate how the operator, without the assistance of a second person, can place the calibration object at various positions within the scene. The calibration tool then automatically finds the calibration object within the scene, since the calibration tool knows the properties of the calibration object. The tool can scan the visible scene until it finds properties corresponding with the known properties of the calibration object. This can be done automatically, or in response to the operator returning to a computer running a calibration tool and indicating that the calibration object is visible within the scene. The tool then estimates, based on the observed distance, the perspective of the camera. This is all done without requiring a second person to perform the calibration, and without the need for manually entering calibration parameters.

In another embodiment, one or more calibration objects can be provided in a video camera calibration kit. A plurality of calibration objects can be used to facilitate setup of the camera in a number of different situations. For example, if a camera observes a very short range area, a smaller calibration object can be used. A medium sized calibration object can be used to calibrate a camera positioned to view a medium range distance or area. A larger calibration object can then be used to calibrate a camera provided in a long range area. One reason to have different (small/larger) calibration objects is that a long range calibration object can also be used at short range, but can be cumbersome. A smaller calibration can be enough in a short range situation.

In a further embodiment, the calibration object can include foldable or adjustable portions arranged to adjust the height and/or width of the object. The adjustable portions can be movable between folding or locking positions corresponding to dimensions for short range, medium range and long range calibration. Alternatively, markings can be provided on the adjustable portions or on non-adjustable portions of the calibration object to indicate positions at which a user can position or fold the adjustable portions for short range, medium range and long range calibration. In this way, a single calibration object can be provided that facilitates setup of the video camera in a number of different situations.

As mentioned earlier, a static object detector according to an embodiment of the present invention can automatically detect a type of calibration object when the object is placed in a scene. In that case, the calibration object can include a type identifier. For example, in a system having three different model types, a similar pattern can be used in each of the models, but with small differences to enable the system to identify which type the model is. For example, one model can be provided with an orange surrounding bar and a white rectangle. Another model can be provided with the same surrounding border, but with two bars of different colours in the white area. In the third model, a triangle can be placed in the white part to allow it to be easily distinguished. Any type identifier can be used to distinguish calibration object models from one another, using any combination of visual identifiers. The visual identifiers can be provided in an aesthetically pleasing manner.

In another embodiment, models can be distinguished from one another and/or detected by the system because they include a pattern of shapes with alternating colours, similar to a checkerboard pattern. The system will be provided with suitable detection algorithms to detect the different visual identifiers. The embodiment in FIG. 3 is more aesthetically pleasing and gives the user less information about the estimation system.

In some situations, where the camera observes a medium range scene, the automatic calibration tool or the semi-automatic tool could be used. In both cases, manual entry of the calibration parameters is a fall-back position. Therefore, according to an embodiment of the present invention, a vide camera calibration system is provided. The system provides an automatic calibration tool, a semi-automatic calibration tool including a calibration object, and permits manual entry of calibration parameters if the other calibration tools are unable to estimate the perspective.

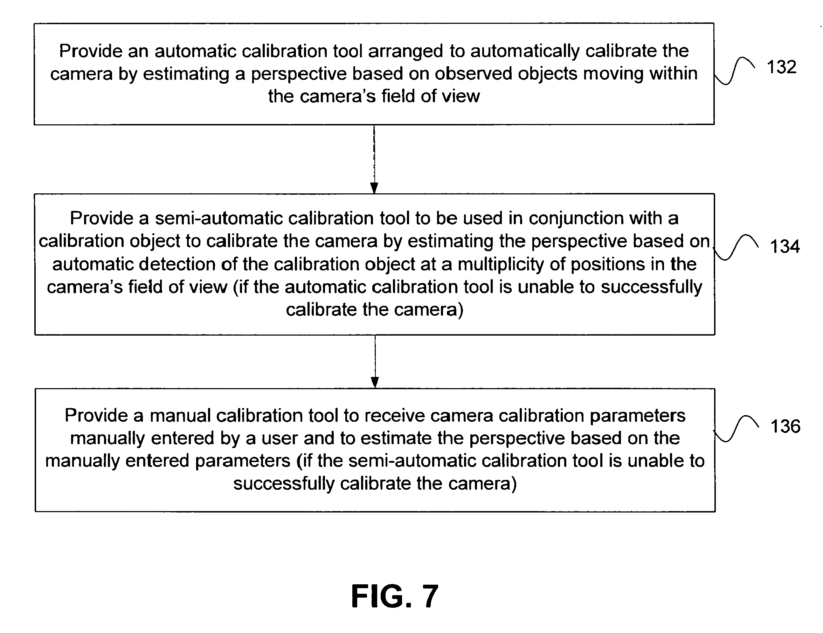

In an embodiment, a computer readable medium is provided storing statements and instructions for execution by a processor to perform a method of calibrating a video camera including, as shown in the flowchart of FIG. 7. The method can include the following steps: providing an automatic calibration tool arranged to automatically calibrate the camera by estimating a perspective based on observed objects moving within the camera's field of view (step **132**); providing a semi-automatic calibration tool to be used in conjunction with a calibration object to calibrate the camera by estimating the perspective based on automatic detection of the calibration object at a multiplicity of positions in the camera's field of view (step **134**); and providing a manual calibration tool to receive camera calibration parameters manually entered by a user and to estimate the perspective based on the manually entered parameters (step **136**).

When executed, the statements and instructions stored on the computer readable medium can provide a graphical user interface for providing the calibration tools described above. The step **134** of providing the semi-automatic calibration tool can be performed if the automatic calibration tool is unable to successfully calibrate the camera. Similarly, the step **136** of providing the manual calibration tool can be performed if the semi-automatic calibration tool is unable to successfully calibrate the camera.

In the preceding description, for purposes of explanation, numerous details are set forth in order to provide a thorough understanding of the embodiments of the invention. However, it will be apparent to one skilled in the art that these specific details are not required in order to practice the invention. In other instances, well-known electrical structures and circuits are shown in block diagram form in order not to obscure the invention. For example, specific details are not provided as to whether the embodiments of the invention described herein are implemented as a software routine, hardware circuit, firmware, or a combination thereof.

Embodiments of the invention can be represented as a software product stored in a machine-readable medium (also referred to as a computer-readable medium, a processor-readable medium, or a computer usable medium having a computer-readable program code embodied therein). The machine-readable medium can be any suitable tangible medium, including magnetic, optical, or electrical storage medium including a diskette, compact disk read only memory (CD-ROM), memory device (volatile or nonvolatile), or similar storage mechanism. The machine-readable medium can contain various sets of instructions, code sequences, configuration information, or other data, which, when executed, cause a processor to perform steps in a method according to an embodiment of the invention. Those of ordinary skill in the art will appreciate that other instructions and operations necessary to implement the described invention can also be stored on the machine-readable medium. Software running from the machine-readable medium can interface with circuitry to perform the described tasks.

The above-described embodiments of the invention are intended to be examples only. Alterations, modifications and variations can be effected to the particular embodiments by those of skill in the art without departing from the scope of the invention, which is defined solely by the claims appended hereto.

## Claims

1. A video camera perspective calculator comprising:
a calibration object detector arranged to detect a calibration object in video data representing a scene observed by a video camera, and arranged to gather object data for the detected calibration object at a multiplicity of positions; and
an automatic plane calculator, in communication with the calibration object detector, arranged to calculate the perspective of the camera based on gathered object data from the calibration object detector for at least one calibration object at a multiplicity of positions.

2. The video camera perspective calculator of claim 1 wherein the calibration object detector comprises an automatic moving object detector arranged to detect a plurality of moving objects, each of the moving objects traversing a field of view of the video camera, and wherein the automatic plane calculator calculates the perspective of the camera based on gathered object data for the plurality of moving objects at a multiplicity of positions.

3. The video camera perspective calculator of claim 1 or claim 2 wherein the calibration object detector comprises a static object detector arranged to detect a static calibration object placed at a plurality of positions in the field of view of the video camera.

4. The video camera perspective calculator of claim 3 wherein the static object detector stores known properties of the static calibration object, and the static object detector automatically detects the static calibration object based on a comparison of the stored properties of the static calibration object with video data in the field of view of the video camera.

5. The video camera perspective calculator of claim 3 wherein the static object detector detects the static calibration object in response to receiving an indication that the static calibration object is within the field of view of the video camera.

6. The video camera perspective calculator of any one of claims 1 to 4 wherein the automatic plane calculator comprises a manual parameter receiver arranged to accept manually input perspective data provided by an operator.

7. The video camera perspective calculator of any one of claims 1 to 6 further comprising a data enhancer, in communication with the automatic plane calculator, to iteratively eliminate outliers from data samples to be processed by the automatic plane calculator.

8. A video camera calibration kit comprising:
a calibration object including two areas having contrasting visual appearance and easily distinguishable from a surrounding scene;
a calibration object detector arranged to detect the calibration object in video data representing a scene observed by a video camera and to gather position data for the detected calibration object at a multiplicity of positions, the calibration object detector including a memory storing a known size and shape of the calibration object; and
an automatic plane calculator, in communication with the calibration object detector, arranged to calculate the perspective of the camera based on gathered object data from the calibration object detector for at least one calibration object at a multiplicity of positions.

9. The video camera calibration kit of claim 8 further comprising instructions for using the components of the kit to calibrate a video camera by calculating the perspective of the camera based on detection of the calibration object.

10. The video camera calibration kit of claim 8 or claim 9 wherein the calibration object comprises a first area of a first colour, and a second area of a second contrasting colour.

11. A method of providing one or more calibration tools for calculating a perspective of a video camera, comprising:
providing an automatic calibration tool arranged to automatically calibrate the camera by calculating a perspective based on observed objects moving within the camera's field of view;
providing a semi-automatic calibration tool to be used in conjunction with a calibration object to calibrate the camera by calculating the perspective based on automatic detection of the calibration object at a multiplicity of positions in the camera's field of view; and
providing a manual calibration tool to receive camera calibration parameters manually entered by a user and to calculate the perspective based on the manually entered parameters.

12. The method of claim 11 wherein providing the semi-automatic calibration tool is performed if the automatic calibration tool is unable to successfully calibrate the camera, and providing the manual calibration tool is performed if the semi-automatic calibration tool is unable to successfully calibrate the camera.

13. A computer readable medium storing statements and instructions for execution by a processor to provide a graphical user interface arranged to perform the method of claim 11.
